# EUROPÄISCHE PATENTANMELDUNG

(11) **EP 3 521 579 A1**
(43) Veröffentlichungstag der Anmeldung: **07.08.2019**
(21) Anmeldenummer: 18000823.7
(22) Anmeldetag: 23.10.2018
(51) Int. Cl.: F01N 3/20

(54) **REDUKTIONSMITTELDOSIERSYSTEM MIT VERDAMPFER**

(30) Priorität: 02.02.2018 DE 102018000851
(71) Anmelder: Albonair GmbH, 44263 Dortmund (DE)
(72) Erfinder: Hüthwohl, Georg, 44229 Dortmund (DE)
(74) Vertreter: Patentanwaltskanzlei Methling

(57) **Zusammenfassung**

Die Erfindung betrifft ein Reduktionsmitteldosiersystem zur Einleitung eines Reduktionsmittels in den Abgasstrom eines Verbrennungsmotors (20) zur selektiven katalytischen Reduktion, mit zumindest einer Förderpumpe (3), mittels derer Reduktionsmittel über zumindest eine Saugleitung (2) aus einem Reduktionsmitteltank (1) gesaugt und über zumindest eine Druckleitung (4) zu zumindest einer Eindosierstelle (7) gefördert wird, wobei stromauf der Eindosierstelle (7) ein Verdampfer (5) angeordnet ist, an dem zumindest eine zu der Eindosierstelle (7) führende Dampfleitung (14) angeschlossen ist.

## Beschreibung

Die Erfindung betrifft ein Reduktionsmitteldosiersystem zur Einleitung eines Reduktionsmittels in den Abgasstrom eines Verbrennungsmotors zur selektiven katalytischen Reduktion, mit zumindest einer Förderpumpe, mittels derer Reduktionsmittel über zumindest eine Saugleitung aus einem Reduktionsmitteltank gesaugt und über zumindest eine Druckleitung zu zumindest einer Eindosierstelle gefördert wird.

Ferner betrifft die Erfindung ein Verfahren zum Betrieb eines Reduktionsmitteldosiersystems.

Derartige Reduktionsmitteldosiersysteme sind beispielsweise bekannt aus DE. 10 2008 013 960 A1, DE 10 2009 016 810 A1 und DE 10 2009 040 111 A1.

Katalysatoren zur selektiven katalytischen Reduktion (englisch: selective catalyic reduction, abgekürzt: SCR), sogenannte SCR-Katalysatoren, werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel mit einer Dosiervorrichtung in das Abgassystem eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil insbesondere gemäß DIN 70070 eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im Wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion der Ausstoß von Stickoxyden um etwa 90 % reduziert.

Bei den bekannten Reduktionsmitteldosiersystemen zur Einspritzung eines Reduktionsmittels in den Abgasstrom eines Verbrennungsmotors zur selektiven katalytischen Reduktion können sich die relativ niedrigen Temperaturen der Abgase bei einem Kaltstart des Verbrennungsmotors, d.h. bevor die Betriebstemperatur des Verbrennungsmotors erreicht ist, ungünstig auf die Funktionsweise eines SCR-Katalysators auswirken.

Nach der Einspritzung des Harnstoffs in wässriger Lösung in den Abgasstrang muss für die SCR-Reaktion zunächst Ammoniak (NH₃) gebildet werden. Hierbei wird das reduzierend wirkende Ammoniak durch die thermische Zersetzung von Harnstoff (Thermolyse) und die Hydrolyse der entstehenden Isocyansäure freigesetzt. Die Aufbereitung unterteilt sich somit in die folgenden beiden Reaktionsschritte:

Thermolyse (NH₂)₂CO → NH₃ + HNCO

Hydrolyse HNCO + H₂O → NH₃ + CO₂

In der ersten Reaktion, der Thermolyse, wird durch den Einfluss der Temperatur Harnstoff in Ammoniak (NH₃) und Isocyansäure (HNCO) umgewandelt. Im zweiten Schritt folgt unter Anwesenheit von Wasser die Hydrolyse, in der die Isocyansäure ebenfalls in Ammoniak unter Bildung von Kohlendioxid (CO₂) umgewandelt wird. Relative niedrige Temperaturen, wie sie beispielsweise beim Kaltstart des Verbrennungsmotors vorliegen, können den Ablauf dieser Reaktionen verlangsamen. Die angestrebten Reaktionen würden im schlimmsten Fall nicht stattfinden, da die Zersetzung des Harnstoffs erst oberhalb von 150° Celsius erfolgt, sodass die selektive katalytische Reduktion bis zum Erreichen dieser Temperatur ausbleibt.

Die Aufgabe der Erfindung ist es, ein Reduktionsmitteldosiersystem der eingangs genannten Art derart weiterzubilden, dass die Funktionsweise eines SCR-Katalysators insbesondere bei einem Kaltstart eines Verbrennungsmotors, d.h. bevor die Betriebstemperatur des Verbrennungsmotors und die damit einhergehende Abgastemperatur erreicht ist, sichergestellt wird.

Diese Aufgabe wird erfindungsgemäß durch ein Reduktionsmitteldosiersystem gemäß Anspruch 1 und ein Verfahren zum Betrieb eines Reduktionsmitteldosiersystems gemäß Anspruch 10 gelöst. Vorteilhafte Weiterbildungen der Erfindung sind in den abhängigen Ansprüchen angegeben.

Besonders vorteilhaft bei einem Reduktionsmitteldosiersystem zur Einleitung eines Reduktionsmittels in den Abgasstrom eines Verbrennungsmotors zur selektiven katalytischen Reduktion, mit zumindest einer Förderpumpe, mittels derer Reduktionsmittel über zumindest eine Saugleitung aus einem Reduktionsmitteltank gesaugt und über zumindest eine Druckleitung zu zumindest einer Eindosierstelle gefördert wird, ist es, dass stromauf der Eindosierstelle ein Verdampfer angeordnet ist, an dem zumindest eine zu der Eindosierstelle führende Dampfleitung angeschlossen ist.

Erfindungsgemäß wird das Reduktionsmittel somit stromauf der Eindosierstelle vor der Einleitung in den Abgasstrom mittels des Verdampfers verdampft. Insbesondere kann der Verdampfer dabei zwischen der Eindosierstelle und Förderpumpe angeordnet sein.

Dadurch, dass das Reduktionsmitteldosiersystem den Verdampfer aufweist, kann die Einleitung des Reduktionsmittels, insbesondere bei der Harnstofflösungseindosierung, verbessert werden. Der Verdampfer ermöglicht ein Verdampfen des Reduktionsmittels bereits vor dessen Einleitung in den Abgasstrom, sodass die angestrebten Reaktionen, insbesondere Thermolyse und/oder Hydrolyse, auch bei niedriger Temperatur des Abgasstroms stattfinden können. Auf diese Weise können die Funktionsweise eines SCR-Katalysators und damit die selektive katalytische Reduktion des Abgases bei niedrigen Abgastemperaturen, wie sie bei einem Kaltstart des Verbrennungsmotors vorkommen, sichergestellt werden. Unter einem Kaltstart eines Verbrennungsmotors ist ein Start zu verstehen, bei dem die Temperatur des Motors unterhalb seiner normalen Betriebstemperatur liegt. Je nach Motorart kann die die normale Betriebstemperatur des Motors variieren.

Durch die Einleitung des Reduktionsmittels in verdampfter Form kann ferner die Vermischung des Reduktionsmittels mit dem Abgas optimiert und insbesondere beschleunigt werden, sodass eine höhere Effizienz der selektiven katalytischen Reduktion ermöglicht wird.

Mit dem Begriff des Verdampfers ist dabei im erfindungsgemäßen Sinne gemeint, dass eine Einrichtung vorgesehenen ist, die ein Element zur Übertragung von Wärme an das Reduktionsmittel umfasst und insbesondere eine Dampfkammer umfassen kann. Ferner wird erfindungsgemäß zumindest ein Teil, insbesondere bis zu 100%, des durch den Verdampfer geführten Reduktionsmittels mittels des Verdampfers verdampft. Die Verdampfungstemperatur kann dabei vorteilhafterweise im Bereich von 180° bis 200° Celsius liegen.

Die Begriffe Reduktionsmitteldosiersystem bzw. Dosiersystem werden im Sinne der Erfindung synonym verwendet. Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt. Im Sinne der Erfindung werden die Begriffe Reduktionsmittel und Reduktionsmittellösung synonym verwendet.

Die vielfach eingesetzte Reduktionsmittellösung gemäß DIN 70070 gefriert aufgrund ihres Wassergehaltes bei ca. -11° C. Daher ist es vorteilhaft, eine Beheizungseinrichtung beispielsweise innerhalb des Dosiersystems zur Beheizung der Reduktionsmittellösung für den Fall sehr niedriger Umgebungstemperaturen vorzusehen. Eine solche Beheizungseinrichtung kann kumulativ zu dem Heizelement angeordnet sein, insbesondere innerhalb des Tanks.

Als Förderpumpen können beispielsweise Inline-Pumpen eingesetzt werden. Bei der Inline-Pumpe handelt es sich um eine Sonderform der Kolbenpumpe in Form einer Doppelkolbenpumpe, bei der zwei Kolben in einer Hülse betrieben werden. Der mittels einer Spule magnetisch angetriebene Druckkolben fördert das durch den Saugstutzen in die Pumpe eingetretene Reduktionsmittel in einer Vorwärtsbewegung mittels Gegendruck eines Steuerkolbens über den Druckstutzen zur Düse. Eine solche Pumpe, bei welcher der Kolben mittels einer Spule magnetisch angetrieben wird, wird auch als Magnetkolbenpumpe bezeichnet. Jede Förderpumpe kann als Pumpeneinheit aufgebaut sein und zusätzlich weitere Bauteile, insbesondere Schaltventile und/oder Sensoren als integrale Bestandteile aufweisen.

Kern der Erfindung ist somit ein Reduktionsmitteldosiersystem zur Einleitung eines Reduktionsmittels in den Abgasstrom eines Verbrennungsmotors zur selektiven katalytischen Reduktion, wobei das Reduktionsmittel vor der Einleitung in den Abgasstrom insbesondere während eines festlegbaren Zeitraumes nach einem Kaltstart insbesondere bei einer festlegbaren Verdampfungstemperatur mittels eines Verdampfers verdampft wird. Auf diese Weise werden aus einer niedrigen Abgastemperatur resultierende Nachteile überwunden. Ferner kann der Wirkungsgrad der selektiven katalytischen Reduktion erhöht werden, indem die Einleitung des Reduktionsmittels in den Abgasstrom in Form von Dampf erfolgt, sodass eine bessere Durchmischung des Abgases und des Reduktionsmitteldampfes ermöglicht wird.

Insbesondere kann dabei die Dampfleitung unmittelbar oder mittelbar zu der Eindosierstelle führen, wobei zwischen der Dampfleitung und der Eindosierstelle weitere Bauteile, beispielsweise Ventile und/oder Filter und/oder Bypässe angeordnet sein können.

Insbesondere kann das Dosiersystem zumindest einen Reduktionsmittelfilter aufweisen. Hierdurch kann gewährleistet werden, dass die Reduktionsmittellösung in der gewünschten Qualität und Reinheit bereitgestellt wird, um Verstopfungen von Leitungen oder der Eindosierstelle vorzubeugen. Insbesondere kann der Verdampfer eine Dampfkammer aufweisen, in der das Reduktionsmittel erwärmt wird. Insbesondere kann die Eindosierstelle wärmeisoliert sein, sodass das verdampfte Reduktionsmittel möglichst wenig Wärme während des Transports durch die Eindosierstelle verliert und somit nur wenig abkühlt. Insbesondere kann auch der Verdampfer wärmeisoliert sein.

Insbesondere kann das Reduktionsmittel bei einer Temperatur von 180 °C bis 200 °C im Verdampfer verdampft werden. Bei einer höheren Temperatur können Nebenprodukte entstehen, die den Prozess stören, insbesondere die Gefahr einer Verstopfung des Dosiersystems erhöhen können.

Vorzugsweise weist der Verdampfer zumindest ein elektrisches Heizelement auf. Anders ausgedrückt wird der Verdampfer dabei mittels des elektrischen Heizelementes betrieben. Durch das elektrische Heizelement lässt sich die Verdampfungstemperatur einfach und zuverlässig insbesondere über ein Steuergerät regeln. Hierzu kann das Reduktionsmitteldosiersystem ein Steuergerät aufweisen. Die elektrische Energie für das Heizelement kann insbesondere aus dem Bordnetz eines Kraftfahrzeugs, insbesondere mittels einer Batterie oder mittels einer Lichtmaschine bereitgestellt werden. Kumulativ zu dem elektrischen Heizelement kann der Verdampfer ferner mittels eines Wärmerohrs, das einen Wärmeübergang vom Abgasstrom des Verbrennungsmotors zu dem Reduktionsmittel ermöglicht, betrieben werden.

Bevorzugt weist der Verdampfer zumindest ein Wärmerohr, insbesondere eine Heatpipe auf, durch welche/s ein Wärmeübergang vom Abgasstrom des Verbrennungsmotors zu dem Reduktionsmittel erfolgt. Ein Wärmerohr bietet einen energieeffizienten Betrieb des Verdampfers, da dadurch auf eine Energieentnahme aus dem Bordnetz verzichtet werden kann. Ferner können Wärmerohre leichter als herkömmliche Wärmeüberträger ausgeführt werden, sodass das Gesamtgewicht eines Kraftfahrzeugs und damit auch sein Kraftstoffverbrauch reduziert werden können. Insbesondere kann das Wärmerohr möglichst motornah am Abgasstrang des Motors verbaut sein, um einen Wärmeübergang von einem Abgas mit möglichst hoher Temperatur zu ermöglichen und somit eine möglichst hohe Effizienz zu erzielen.

Ein Wärmerohr überträgt Wärme von einer Wärmequelle höherer Temperatur zu einer Wärmesenke mit niedrigerer Temperatur. Die Übertragung erfolgt mittels eines insbesondere in einem Rohr hermetisch abgedichteten Arbeitsmediums, insbesondere Wasser oder Ammoniak, aus Flüssigkeit und Dampf. An der Wärmequelle wird das Medium erwärmt, wodurch es verdampft und zur Wärmesenke wandert. An der Wärmesenke kondensiert der Dampf unter Abgabe der Wärme. Hierbei bilden der Abgasstrom die Wärmequelle und der Verdampfer die Wärmsenke aus.

Insbesondere kann es sich bei dem Wärmerohr um eine Heatpipe handeln, die mittels des Dochtprinzips unter Einsatz von Kapillaren zum Transport des Mediums betrieben wird. Insbesondere kann das Wärmerohr aus zwei Heatpipes bestehen. Die Regelung insbesondere in einem geschlossenen Regelkreis der Heatpipe kann dabei extern erfolgen, insbesondere mittels einer Anordnung von zwei Heatpipes, die von einem Koppler insbesondere positionell gekoppelt bzw. entkoppelt werden können. Alternativ oder kumulativ kann die Regelung der Heatpipe insbesondere in einem geschlossenen Regelkreis intern erfolgen, insbesondere mittels eines Ventils oder einer Drossel innerhalb der Heatpipe als Steuerelement, das den Transport des Arbeitsmediums innerhalb der Heatpipe begrenzen kann. Kumulativ zum Wärmerohr kann der Verdampfer ferner mittels eines elektrischen Heizelementes betrieben werden.

Vorzugsweise ist die Eindosierstelle als zumindest eine Düse, insbesondere eine Dampfdüse ausgebildet. Mittels einer derartigen Düse ist eine optimale Verteilung des Dampfes im Abgas möglich. Insbesondere kann die Düse hierbei einen besonders kleinen Austritt, insbesondere von 1 mm oder kleinerer Durchmesser, aufweisen. Ferner kann die Dampfdüse wärmeisoliert ausgebildet sein, insbesondere mittels einer doppelten Ummantelung, wobei zwischen den beiden Ummantelungen ein Luftspalt vorhanden sein kann. Eine derartige Wärmeisolierung minimiert die Abkühlung des Dampfes während des Transports.

Bevorzugt weist die Dampfleitung ein erstes Rückschlagventil auf, welches in Strömungsrichtung zu der Eindosierstelle öffenbar ist. Ein derartiges Rückschlagventil kann bei einem definierten Überdruck von dem Verdampfer gegenüber der Eindosierstelle öffnen, während es in gegensätzlicher Richtung stets geschlossen bleibt. Über dieses Rückschlagventil erfolgt somit die Förderung des verdampften Reduktionsmittels zu der Eindosierstelle. Insbesondere kann das Rückschlagventil hierzu stromab des Verdampfers und stromauf der Eindosierstelle angeordnet sein. Dadurch kann der Druck im Verdampfer, insbesondere bei 1,5 bis 3 bar, gehalten werden, sodass eine kontinuierliche Verdampfung erfolgt. Insbesondere kann es sich dabei um ein Kugelrückschlagventil handeln. Der Öffnungsdruck des Rückschlagventils kann beispielsweise bei 2 bar liegen. Alternativ oder kumulativ kann die Dampfleitung ein steuerbares Ventil aufweisen.

Vorzugsweise weist die Dampfleitung ein über einen Bypass parallel geschaltetes Ventil, insbesondere ein Rückschlagventil auf, welches in Strömungsrichtung zu dem Verdampfer hin öffenbar ist. Insbesondere kann es sich dabei um ein Kugelrückschlagventil und/oder ein steuerbares Ventil handeln. Ein derartiges Ventil kann bei einem definierten Überdruck von der Eindosierstelle gegenüber dem Verdampfer öffnen und/oder insbesondere mittels eines Steuergeräts geöffnet werden, während es in gegensätzlicher Richtung stets geschlossen bleibt. Nach Abschalten des Verdampfers und/oder des Dosiersystems kondensiert der im Verdampfer verbliebene Dampf, sodass ein Unterdruck, insbesondere Vakuum im Verdampfer entsteht. Bei einem definierten Druck öffnet das Ventil, sodass Abgas über die Eindosierstelle angesaugt wird. Auf diese Weise wird die Eindosierstele zumindest an ihrem Austritt vom verbliebenen Reduktionsmittel befreit, um so ein Verstopfen der Eindosierstelle zu vermeiden. In dem Falle, dass ein erstes Rückschlagventil angeordnet ist, kann das Ventil parallel zu dem ersten Rückschlagventil angeordnet sein. Insbesondere wenn es sich bei dem über den Bypass parallel geschalteten Ventil um ein Rückschlagventil handelt, kann es in entgegengesetzter Richtung zum ersten Rückschlagventil vorgespannt sein.

Bevorzugt ist zumindest eine Mischkammer stromab der Eindosierstelle angeordnet. Durch die Mischkammer wird eine optimierte Verteilung bzw. Durchmischung des Reduktionsmittels in dem Abgas und damit ein erhöhter Wirkungsgrad der katalytischen Reduktion ermöglicht.

Vorzugsweise weist das Reduktionsmitteldosiersystem zumindest eine Druckluftversorgung auf, mittels welcher Druckluft in das Reduktionsmitteldosiersystem über eine Druckluftleitung einleitbar ist. Insbesondere kann die Druckluftversorgung insbesondere mittelbar über ein Steuerventil stromauf des Verdampfers und/oder stromab des Verdampfers angeschlossen sein. Insbesondere kann das Steuerventil dabei mittels eines Steuergeräts angesteuert werden. Insbesondere kann Druckluft nach Abschalten des Reduktionsmitteldosiersystems eingeleitet werden, um das im System verbliebene Reduktionsmittel zu entfernen und somit möglichen Reduktionsmittelablagerungen im Dosiersystem, insbesondere einem Verstopfen der Eindosierstelle, vorzubeugen.

Insbesondere kann das Dosiersystem ein Steuergerät aufweisen, mittels dessen die Förderpumpe und/oder der Verdampfer und/oder eine Druckluftversorgung gesteuert und/oder in einem geschlossenen Regelkreis geregelt werden können. Das Steuergerät kann dabei derart ausgebildet sein, dass es im Dosiersystem und/oder im Abgasstrom und/oder im Verbrennungsmotor zu erfassende Messwerte empfangen und/oder verarbeiten kann,

Bevorzugt weist die Druckleitung ein steuerbares Mehrwegeventil, insbesondere ein Zwei- oder Dreiwegeventil auf, über welches zumindest eine parallel geschaltete Bypassleitung angeschlossen ist, die zu der Eindosierstelle und/oder einer weiteren Eindosierstelle führt. Durch die Bypassleitung kann somit Reduktionsmittel in flüssiger Form in den Abgasstrom eingeleitet werden. Dadurch wird es ermöglicht, das Dosiersystem derart anzusteuern, dass insbesondere abhängig von den vorherrschenden insbesondere zu messenden Parametern, wie beispielsweise Motor- und/oder Abgastemperatur und/oder NOx-Konzentration, das Reduktionsmittel in verdampfter Form und/oder flüssiger Form in den Abgasstrom einzuleiten. Vorzugsweise kann das Mehrwegeventil insbesondere mittels eines Steuergeräts derart angesteuert werden, dass nach einer Überwindung des Kaltstarts das Reduktionsmittel über die Bypassleitung zu der Eindosierstelle oder der weiteren Eindosierstelle geleitet wird. Sobald dies geschieht, kann der Verdampfer abgeschaltet werden.

Die weitere Eindosierstelle kann dabei zur Einspritzung des Reduktionsmittels in flüssiger Form zur selektiven katalytischen Reduktion des Abgases in demselben SCR-Katalysator, in dem auch die Reduktion mittels des verdampften Reduktionsmittels erfolgt, oder in einem weiteren SCR-Katalysator genutzt werden. Die weitere Eindosierstelle kann ebenfalls als Düse, insbesondere außenmischende Zweistoffdüse, bei der das Reduktionsmittel mittels Druckluft aus einer Druckluftversorgung versprüht wird, ausgebildet sein.

Alternativ oder kumulativ ist auch eine Einleitung des Reduktionsmittels in flüssiger Form über einen abgeschalteten Verdampfer möglich.

Alternativ oder kumulativ kann stromab der Eindosierstelle ein zweites Reduktionsmitteldosiersystem angeschlossen sein, das insbesondere eingeschaltet wird, insbesondere nachdem der Kaltstart des Verbrennungsmotors überwunden ist. Dieses zweite Dosiersystem kann dabei den Reduktionsmitteltank und/oder die Druckluftversorgung des bereits beschriebenen Reduktionsmitteldosiersystems verwenden. Das zweite System zur Einspritzung eines Reduktionsmittels in den Abgasstrom eines Verbrennungsmotors zur selektiven katalytischen Reduktion, kann zumindest eine Förderpumpe aufweisen, mittels derer Reduktionsmittel aus einem Reduktionsmitteltank über zumindest eine Saugleitung angesaugt, über zumindest eine Druckleitung gefördert und über zumindest eine Düse in den Abgasstrom des Verbrennungsmotors eingeleitet wird, wobei das Dosiersystem eine Druckluftversorgung umfasst und das Reduktionsmittel mittels Druckluft außerhalb der Düse zerstäubt wird. Das zweite Reduktionsmitteldosiersystem kann an dem Reduktionsmitteltank und/oder an der Druckluftversorgung des bereits beschriebenen Reduktionsmitteldosiersystems angeschlossen sein.

Besonders vorteilhaft an einem Verfahren zum Betrieb eines Reduktionsmitteldosiersystems insbesondere nach einem der vorhergehenden Ansprüche zur Einleitung eines Reduktionsmittels in den Abgasstrom eines Verbrennungsmotors zur selektiven katalytischen Reduktion, wobei mittels zumindest einer Förderpumpe Reduktionsmittel aus einem Reduktionsmitteltank gefördert wird, ist es, dass das Reduktionsmittel zumindest während eines festlegbaren Zeitraumes insbesondere nach einem Kaltstart des Verbrennungsmotors mittels zumindest eines Verdampfers vor der Einleitung in den Abgasstrom verdampft wird.

Unter einem Kaltstart eines Verbrennungsmotors ist ein Start zu verstehen, bei dem die Temperatur des Motors unterhalb seiner Betriebstemperatur liegt.

Dadurch, dass das Reduktionsmittel vor der Einleitung verdampft wird, können die angestrebten Reaktionen, insbesondere Thermolyse und/oder Hydrolyse, unabhängig von der Temperatur, insbesondere bei niedriger Temperatur des Abgasstroms sichergestellt werden. Auf diese Weise können die Funktionsweise eines SCR-Katalysators und damit die selektive katalytische Reduktion des Abgases bei niedrigen Abgastemperaturen, wie sie bei einem Kaltstart des Verbrennungsmotors vorkommen, sichergestellt werden. Insbesondere sollte dabei jedoch eine Verdampfungstemperatur von 200° Celsius nicht überschritten werden, um eine Bildung von unerwünschten Nebenprodukten bei der Verdampfung des Reduktionsmittels, insbesondere der Hamstofflösung zu vermeiden.

Durch die Einleitung des Reduktionsmittels in verdampfter Form kann ferner die Vermischung des Reduktionsmittels mit dem Abgas optimiert, insbesondere beschleunigt werden, sodass eine höhere Effizienz der selektiven katalytischen Reduktion ermöglicht wird.

Insbesondere kann dabei der Zeitraum nach dem Kaltstart, während dessen das Reduktionsmittel verdampft wird, als fester Zeitraum oder abhängig von einer insbesondere mittels eines Sensors ermittelten Motor- und/oder Abgastemperatur festgelegt werden.

Vorzugsweise erfolgt mittels eines Steuergerätes eine Regelung zumindest der Förderpumpe und/oder des Verdampfers in einem insbesondere geschlossenen Regelkreis in Abhängigkeit von ermittelten Messwerten, insbesondere in Abhängigkeit der Abgastemperatur und/oder des Abgasmassenstromes und/oder der NOₓ-Konzentration in dem Abgasstrom stromab der Einleitung des Reduktionsmittels. Durch eine derartige Regelung der Förderpumpe und/oder der Förderpumpe insbesondere in einem geschlossenen Regelkreis lässt sich der Betrieb des Reduktionsmitteldosiersystems effizient gestalten. Beispielsweise kann die Leistung des Verdampfers abhängig von der Abgastemperatur und/oder des Abgasmassenstromes angepasst werden. Insbesondere kann die Leistung der Förderpumpe abhängig von dem Abgasmassenstrom und/oder der NOₓ-Konzentration in dem Abgasstrom stromab der Einleitung des Reduktionsmittels angepasst werden.

Bevorzugt ist stromab der Einleitung des Reduktionsmittels, insbesondere in dem Abgasstrom des Verbrennungsmotors, zumindest ein NOₓ-Sensor angeordnet und es erfolgt eine Erfassung der NOₓ-Konzentration in dem Abgas. Insbesondere kann ferner eine Regelung der Förderpumpe und/oder des Verdampfers in Abhängigkeit der gemessenen NOₓ-Konzentration erfolgen. Insbesondere kann die Regelung mittels eines Steuergeräts und/oder in einem geschlossenen Regelkreis erfolgen. In dem Fall, dass mehrere SCR-Katalysatoren zum Einsatz kommen, kann stromab der Einleitung des Reduktionsmittels stromab eines jeweiligen SCR-Katalysators bzw. stromab einer Eindosierstelle eines jeweiligen SCR-Katalysators bedeuten.

Vorzugsweise erfolgt mittels eines Steuergerätes eine Regelung zumindest der Förderpumpe und/oder des Verdampfers derart, dass in dem Verdampfer eine Verdampfungstemperatur in einem Bereich von 180 bis 200°C herrscht. Ein derartiger Temperaturbereich ermöglicht ein Verdampfen des Reduktionsmittels und minimiert die Gefahr der Entstehung von unerwünschten Nebenprodukten, welche den Prozess stören, insbesondere zu einem Verstopfen des Dosiersystems führen, können. Auf diese Weise kann die Wärmezufuhr geregelt werden, insbesondere in einem geschlossenen Regelkreis, sodass das Dosiersystem energieeffizient betrieben werden kann.

Bevorzugt wird nach einer Überwindung des Kaltstarts das Reduktionsmittel in flüssiger Form in den Abgasstrom eingeleitet. Hierzu kann das Reduktionsmitteldosiersystem derart ausgebildet sein und angesteuert werden, dass das Reduktionsmittel nicht über den Verdampfer, sondern direkt von dem Reduktionsmitteltank zu der Einleitung des Reduktionsmittels in den Abgasstrom geleitet wird. Alternativ ist auch eine Einleitung des Reduktionsmittels in flüssiger Form über einen nicht eingeschalteten Verdampfer möglich.

Alternativ oder kumulativ kann jedoch auch ein zweites Reduktionsmitteldosiersystem zur Einspritzung eines Reduktionsmittels in den Abgasstrom zur selektiven katalytischen Reduktion eingeschaltet werden. Das Reduktionsmitteldosiersystem mit dem Verdampfer kann dann hingegen abgeschaltet werden. Eine derartige Abschaltung kann insbesondere erfolgen, wenn eine definierte Motortemperatur und/oder Abgastemperatur erreicht ist. Insbesondere kann das zweite Reduktionsmitteldosiersystem stromab der Einleitung des Reduktionsmittels des den Verdampfer aufweisenden Reduktionsmitteldosiersystems geschaltet sein. Das zweite Dosiersystem zur Einspritzung eines Reduktionsmittels in den Abgasstrom eines Verbrennungsmotors zur selektiven katalytischen Reduktion kann zumindest eine Förderpumpe aufweisen, mittels derer Reduktionsmittel aus einem Reduktionsmitteltank über zumindest eine Saugleitung angesaugt, über zumindest eine Druckleitung gefördert und über zumindest eine Düse in den Abgasstrom des Verbrennungsmotors eingeleitet wird, wobei das Dosiersystem eine Druckluftversorgung umfassen kann und das Reduktionsmittel mittels Druckluft außerhalb der Düse zerstäubt wird. Dieses zweite System kann dabei den Reduktionsmitteltank und/oder die Druckluftversorgung des den Verdampfer aufweisenden Reduktionsmitteldosiersystems verwenden.

Zwei Ausführungsbeispiele der Erfindung sind in den Figuren dargestellt und werden nachfolgend näher erläutert. Es zeigen:
- Figur 1: eine schematische Darstellung eines Abgassystems eines Verbrennungsmotors nach einem ersten Ausführungsbeispiel;
- Figur 2: eine schematische Darstellung eines Abgassystems eines Verbrennungsmotors nach einem zweiten Ausführungsbeispiel;
- Figur 3: eine schematische Darstellung des Reduktionsmitteldosiersystems gemäß des ersten Ausführungsbeispiels.

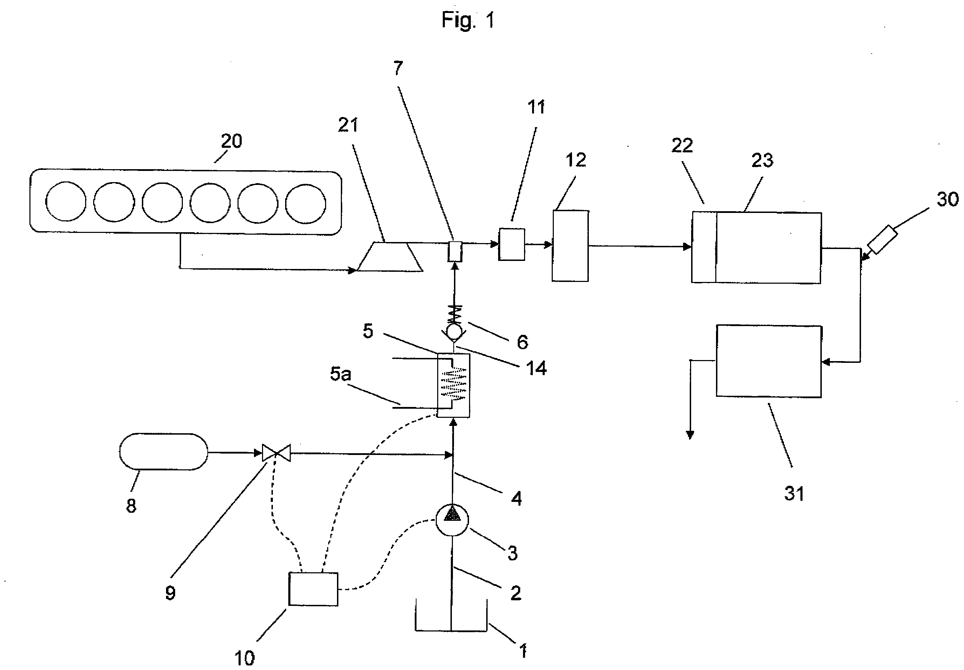

Figur 1 zeigt eine schematische Darstellung eines Abgassystems mit einem Reduktionsmitteldosiersystem zur Einleitung eines Reduktionsmittels in den Abgasstrom eines Verbrennungsmotors 20 zur selektiven katalytischen Reduktion nach einem ersten Ausführungsbeispiel. Mittels des Abgases des Motors 20 wird dabei zunächst der Turbolader 21 angetrieben, wonach das Abgas weiter zur Abgasnachbehandlung geleitet wird.

Mittels der Förderpumpe 3 wird über die Saugleitung 2 ein Reduktionsmittel aus dem Reduktionsmitteltank 1 angesaugt und über die Druckleitung 4 zunächst zum Verdampfer 5 gefördert. Stromab der Förderpumpe 3 und stromauf des Verdampfers 5 ist eine Druckluftversorgung 8 über ein Steuerventil 9 angeschlossen. Das Steuergerät 10 regelt den Betrieb der Förderpumpe 3, des Verdampfers 5 und des Steuerventils 9 in einem geschlossenen Regelkreis. Der Verdampfer 5 wird von einem elektrischen Heizelement 5a gebildet, welches seine Energie aus dem Bordnetz eines KFZ entnimmt. Der Betrieb wird derart in einem geschlossenen Regelkreis geregelt, dass im Verdampfer 5 eine Verdampfungstemperatur von 190° C herrscht.

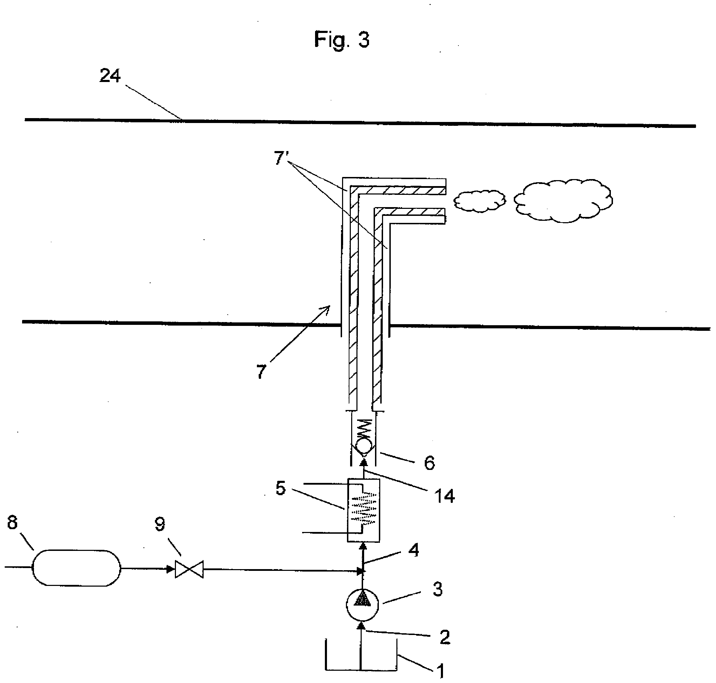

Von dem Verdampfer 5 wird das verdampfte Reduktionsmittel über die Dampfleitung 14 und über ein Rückschlagventil 6, welches bei einem Druck von 2 bar öffnet, zu einer als Dampfdüse ausgeführten Eindosierstelle 7 gefördert. Das Rückschlagventil ist dabei in Strömungsrichtung zu der Eindosierstelle 7 öffenbar. Eine vergrößerte Ansicht der Eindosierstelle 7 ist in Figur 3 dargestellt. Über die Eindosierstelle 7 wird das verdampfte Reduktionsmittel in den Abgasstrom des Verbrennungsmotors 20 eingeleitet.

In der Mischkammer 11 wird das verdampfte Reduktionsmittel mit dem Abgas vermischt, sodass ein höherer Wirkungsgrad ermöglicht wird. Von der Mischkammer 11 gelangt das Gemisch aus dem verdampften Reduktionsmittel und dem Abgas in den ersten SCR-Katalysator 12, wo eine selektive katalytische Reduktion des Abgases stattfindet. Von dort gelangt das Abgas zu einem Oxikat 22 und einem Dieselpartikelfilter 23. Von dem Dieselpartikelfilter 23 gelangt das Abgas in einen zweiten SCR-Katalysator 31, wobei stromab des zweiten SCR-Katalysator 31 eine weitere Eindosierstelle 30 angeschlossen ist, die von einem zweiten nicht dargestellten Reduktionsmitteldosiersystem zur Einspritzung eines Reduktionsmittels in den Abgasstrom gespeist wird. Durch die Eindosierstelle 30 wird erst dann Reduktionsmittel bereitgestellt, wenn der Kaltstart des Motors 20 überwunden und eine ausreichende Abgastemperatur wurde. Dabei wird durch die als außenmischende Zweistoffdüse ausgeführte Eindosierstelle 30 ein Reduktionsmittel in flüssiger Form in den Abgasstrom eingespritzt und außerhalb der Düse mittels Druckluft versprüht. Infolge der dann ausreichend hohen Abgastemperatur erfolgt ein sofortiges Verdampfen des in den Abgasstrom eingespritzten Reduktionsmittels in dem Abgas vor dem Eintritt in den zweiten SCR-Katalysator 31.

Nach Überwindung des Kaltstarts wird die Förderpumpe 3 sowie der Verdampfer 5 abgeschaltet, sodass keine weitere Einleitung eines verdampften Reduktionsmittels über die erste Eindosierstelle 7 in das Abgas mehr erfolgt. Hiernach wird ferner das Steuerventil 9 betätigt, sodass Druckluft aus der Druckluftversorgung 8 den Verdampfer 5 und die Eindosierstelle 7 freibläst. Somit wird ein Verstopfen des Systems insbesondere der Düse 7 verhindert.

Durch die Verdampfung des Reduktionsmittels vor dessen Einleitung in den Abgasstrom, kann die Funktionsweise des SCR-Katalysators auch bei niedrigen Temperaturen des Abgases sichergestellt werden. Ferner kann hierdurch die Effizienz des SCR-Katalysators insofern gesteigert werden, als sich das Reduktionsmittel im verdampften Zustand besser mit dem Abgas vermischen kann.

Alternativ zu der ersten Ausführungsform ist es in einer weiteren Ausführungsform möglich, die Eindosierstelle 30 mittels einer mit der Druckleitung 4 über ein steuerbares Zweiwegeventil parallel geschalteten Bypassleitung mit flüssigem Reduktionsmittel zu versorgen. Ferner kann dabei die Druckluft zum Versprühen des Reduktionsmittels aus der Druckluftversorgung 8 über ein steuerbares Ventil bereitgestellt werden. Das Zweiwegeventil wird in diesem Fall von dem Steuergerät 10 anhängig von einer zu messenden Abgastemperatur angesteuert. Auf diese Weise kann das erfindungsgemäße Dosiersystem Reduktionsmittel sowohl in verdampfter Form über die Eindosierstelle 7 als auch in flüssiger Form über die Eindosierstelle 30 bereitstellen.

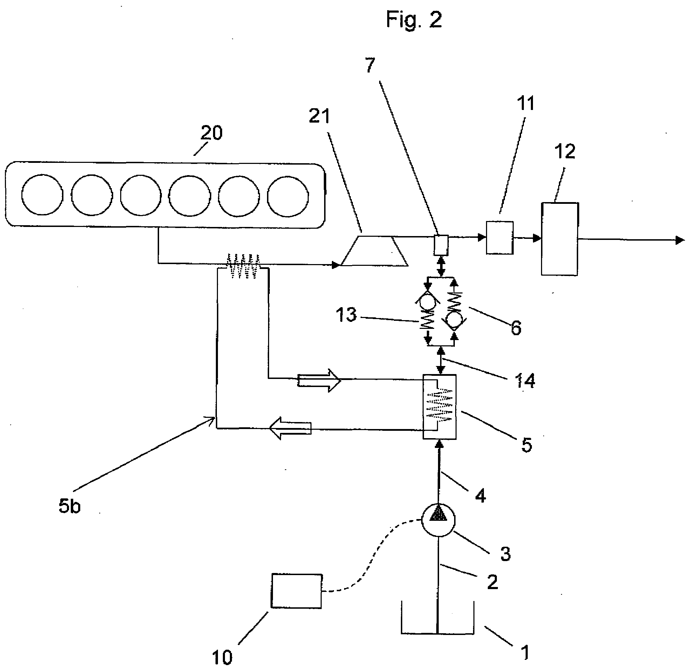

Figur 2 zeigt ein Reduktionsmitteldosiersystem nach einem zweiten Ausführungsbeispiel. Hierbei wird der Verdampfer 5 von einer Heatpipe 5b betrieben. Die Heatpipe 5b überträgt die Wärme des Abgasstroms aus dem Motor 20 zu dem Reduktionsmittel in dem Verdampfer 5. Ein derartiger Betrieb des Verdampfers 5 ist besonders energiesparend. Die Heatpipe 5b ist dabei besonders nah am Motor 20 angeordnet, um Wärmeverluste zu minimieren. Parallel zu dem Rückschlagventil 6 ist ein weiteres Rückschlagventil 13 geschaltet, welches in entgegengesetzte Richtung zu dem Rückschlagventil 6 in Strömungsrichtung zu dem Verdampfer 5 hin öffenbar ist. Nach Abschalten der Heatpipe 5b kondensiert das im Verdampfer 5 verbliebene Reduktionsmittel, sodass ein Unterdruck in dem Verdampfer 5 entsteht. Bei definierter Druckdifferenz zwischen dem Verdampfer 5 und der Eindosierstelle 7 öffnet das Rückschlagventil 13, sodass Abgas durch die Eindosierstelle 7 gesaugt wird. Somit wird zumindest der Ausgang der Eindosierstelle 7 durch das auf diese Weise angesaugte Abgas freigeblasen, sodass eine Verstopfung der Eindosierstelle 7 vermieden werden kann. Dadurch wird eine Druckluftversorgung entbehrlich, weshalb sie auch in dem zweiten Ausführungsbeispiel nicht angeschlossen ist.

Die Figur 3 zeigt einen Ausschnitt eines Reduktionsmitteldosiersystems gemäß Figur 1 mit einer vergrößerten Ansicht der als Dampfdüse ausgeführten Eindosierstelle 7. Die Eindosierstelle 7 ist durch eine doppelte Ummantelung 7' wärmeisoliert, wobei zwischen den Ummantelungen ein Luftspalt 7' ausgebildet ist. Dadurch wird ein Wärmeverlust des Reduktionsmittels während des Transports durch die Eindosierstelle 7 minimiert.

## Patentansprüche

1. Reduktionsmitteldosiersystem zur Einleitung eines Reduktionsmittels in den Abgasstrom eines Verbrennungsmotors (20) zur selektiven katalytischen Reduktion, mit zumindest einer Förderpumpe (3), mittels derer Reduktionsmittel über zumindest eine Saugleitung (2) aus einem Reduktionsmitteltank (1) gesaugt und über zumindest eine Druckleitung (4) zu zumindest einer Eindosierstelle (7) gefördert wird, **dadurch gekennzeichnet, dass** stromauf der Eindosierstelle (7) ein Verdampfer (5) angeordnet ist, an dem zumindest eine zu der Eindosierstelle (7) führende Dampfleitung (14) angeschlossen ist.

2. Reduktionsmitteldosiersystem nach Anspruch 1, **dadurch gekennzeichnet, dass** der Verdampfer (5) zumindest ein elektrisches Heizelement (5a) aufweist.

3. Reduktionsmitteldosiersystem nach Anspruch 1 oder 2, **dadurch gekennzeichnet, dass** der Verdampfer (5) zumindest ein Wärmerohr (5b), insbesondere eine Heatpipe, aufweist, durch welches ein Wärmeübergang vom Abgasstrom des Verbrennungsmotors (20) zu dem Reduktionsmittel erfolgt.

4. Reduktionsmitteldosiersystem nach einem der vorherigen Ansprüche, **dadurch gekennzeichnet, dass** die Eindosierstelle (7) als zumindest eine Düse, insbesondere eine Dampfdüse ausgebildet ist.

5. Reduktionsmitteldosiersystem nach einem der vorherigen Ansprüche, **dadurch gekennzeichnet, dass** die Dampfleitung (14) ein erstes Rückschlagventil (6) aufweist, welches in Strömungsrichtung zu der Eindosierstelle (7) öffenbar ist.

6. Reduktionsmitteldosiersystem nach einem der vorherigen Ansprüche, **dadurch gekennzeichnet, dass** die Dampfleitung (14) ein über einen Bypass parallel geschaltetes Ventil (13), insbesondere ein Rückschlagventil aufweist, welches in Strömungsrichtung zu dem Verdampfer (5) öffenbar ist.

7. Reduktionsmitteldosiersystem nach einem der vorherigen Ansprüche, **dadurch gekennzeichnet, dass** zumindest eine Mischkammer (11) stromab der Eindosierstelle (7) angeordnet ist.

8. Reduktionsmitteldosiersystem nach einem der vorherigen Ansprüche, **dadurch gekennzeichnet, dass** das Reduktionsmitteldosiersystem zumindest eine Druckluftversorgung (8) aufweist, mittels welcher Druckluft in das Reduktionsmitteldosiersystem über eine Druckluftleitung einleitbar ist.

9. Reduktionsmitteldosiersystem nach einem der vorherigen Ansprüche, **dadurch gekennzeichnet, dass** die Druckleitung (4) ein steuerbares Mehrwegeventil, insbesondere ein Zwei- oder Dreiwegeventil aufweist, über welches zumindest eine parallel geschaltete Bypassleitung angeschlossen ist, die zu der Eindosierstelle (7) und/oder einer weiteren Eindosierstelle (30) führt.

10. Verfahren zum Betrieb eines Reduktionsmitteldosiersystems insbesondere nach einem der vorhergehenden Ansprüche zur Einleitung eines Reduktionsmittels in den Abgasstrom eines Verbrennungsmotors (20) zur selektiven katalytischen Reduktion, wobei mittels zumindest einer Förderpumpe (3) Reduktionsmittel aus einem Reduktionsmitteltank (1) gefördert wird, **dadurch gekennzeichnet, dass** das Reduktionsmittel zumindest während eines festlegbaren Zeitraumes insbesondere nach einem Kaltstart des Verbrennungsmotors (20) mittels zumindest eines Verdampfers (5) vor der Einleitung in den Abgasstrom verdampft wird.

11. Verfahren nach Anspruch 10, **dadurch gekennzeichnet, dass** mittels eines Steuergerätes eine Regelung zumindest der Förderpumpe (3) und/oder des Verdampfers (5) in einem insbesondere geschlossenen Regelkreis in Abhängigkeit von ermittelten Messwerten erfolgt, insbesondere in Abhängigkeit der Abgastemperatur und/oder des Abgasmassenstromes und/oder der NOₓ-Konzentration in dem Abgasstrom stromab der Einleitung des Reduktionsmittels.

12. Verfahren nach einem der Ansprüche 10 oder 11, **dadurch gekennzeichnet, dass** stromab der Einleitung des Reduktionsmittels zumindest ein NOₓ-Sensor angeordnet ist und eine Erfassung der NOx-Konzentration in dem Abgas erfolgt, insbesondere, dass eine Regelung der Förderpumpe (3) und/oder des Verdampfers (5) in Abhängigkeit der gemessenen NOₓ-Konzentration erfolgt.

13. Verfahren nach einem der Ansprüche 10 bis 12, **dadurch gekennzeichnet, dass** mittels eines Steuergerätes (10) eine Regelung zumindest der Förderpumpe (3) und/oder des Verdampfers (5) derart erfolgt, dass in dem Verdampfer (5) eine Verdampfungstemperatur in einem Bereich von 180 bis 200°C herrscht.

14. Verfahren nach einem der Ansprüche 10 bis 13, **dadurch gekennzeichnet, dass** nach einer Überwindung des Kaltstarts das Reduktionsmittel in flüssiger Form in den Abgasstrom eingeleitet wird.
